Europäisches Patentamt

European Patent Office

Office européen des brevets

(19)

(11) Veröffentlichungsnummer : **0 158 049**
**B1**

(12) # EUROPÄISCHE PATENTSCHRIFT

(45) Veröffentlichungstag der Patentschrift :
13.04.88

(51) Int. Cl.⁴ : **F 16 B 13/06**

(21) Anmeldenummer : **85101724.4**

(22) Anmeldetag : **16.02.85**

---

(54) **Spreizdübel.**

---

(30) Priorität : **07.04.84 DE 3413231**

(43) Veröffentlichungstag der Anmeldung :
**16.10.85 Patentblatt 85/42**

(45) Bekanntmachung des Hinweises auf die Patenterteilung : **13.04.88 Patentblatt 88/15**

(84) Benannte Vertragsstaaten :
**AT BE CH FR GB IT LI NL**

(56) Entgegenhaltungen :
**EP-A- 0 156 115**
**DE-A- 2 507 658**
**DE-A- 3 146 702**
**DE-A- 3 236 530**
**DE-B- 2 510 274**
**DE-U- 7 518 776**
**FR-A- 2 145 479**
**GB-A- 1 195 686**
**US-A- 1 698 570**

(73) Patentinhaber : **fischerwerke Artur Fischer GmbH & Co. KG**
**Weinhalde 14-18**
**D-7244 Tumlingen/Waldachtal 3 (DE)**

(72) Erfinder : **Fischer, Artur, Dr. h.c.**
**Weinhalde 34**
**D-7244 Waldachtal 3/Tumlingen (DE)**

**Beschreibung**

Die Erfindung betrifft einen Spreizdübel für die Verankerung in vorzugsweise konisch nach innen erweitert hergestellten Bohrlöchern, bestehend aus einem am Bohrlochgrund abzustützenden, einen Spreizkonus aufweisenden Stehbolzen, auf dessen Spreizkonus eine Spreizhülse auftreibbar ist.

Die nicht vorveröffentlichte ältere europäische Anmeldung EP-A-0 156 115 betrifft einen Spreizdübel der obengenannten Gattung, dessen Stehbolzen einen dem Spreizkonus gegenüberliegenden mit einer Aufspaltung versehenen Abschnitt aufweist, dessen beide durch die Aufspaltung gebildeten Segmente entgegengesetzt umbördelbar sind. Mit diesem Spreizdübel kann eine sichere Befestigung eines Gegenstandes in einfacher Weise durch Schlagmontage durchgeführt werden, wobei der Gegenstand gegen die Oberfläche der Wand oder der Decke verspannt wird.

Bei der Abhängung von Rohren, Decken und dgl. werden dagegen Befestigungselemente verwendet, die für sich alleine in der Decke verankert werden, jedoch so gestaltet sind, daß an diese Befestigungselemente nachträglich Gegenstände über Drähte, Lochbänder oder dgl. angehängt werden können. In der Regel befinden sich diese Mittel zum Anhängen von Gegenständen am Stehbolzen, um bei angehängter Last eine Verstärkung der Spreizwirkung zu erzielen.

Ein derartiger Spreizdübel ist aus der DE-A-3 236 530 bekannt, der jedoch den Nachteil hat, daß die Spreizhülse axial gegenüber dem Stehbolzen nicht gesichert ist. Dies hat den Nachteil, daß vor, während oder nach der Montage der zu befestigenden Gegenstände eine Relativbewegung zwischen Spreizkonus und Spreizhülse auftreten kann, die die Spreizwirkung und damit die Stabilität der Befestigung vermindert.

Aus der DE-A-2 510 274 ist weiterhin ein Spreizdübel für die Schlagmontage bekannt, bei dem mittels eines Befestigungsdrahtes gleichzeitig eine zusätzliche Verbindung zwischen Spreizhülse und Stehbolzen möglich ist. Eine Fixierung des im Bohrloch eingesetzten Spreizdübels ohne den genannten Draht oder zusätzliche Hilfsmittel ist bei diesem bekannten Spreizdübel nicht möglich.

Außerdem wird eine optimale Fixierung nur bei einer genauen Ausrichtung der den Befestigungsdraht aufnehmenden Bohrungen erreicht.

Der Erfindung liegt die Aufgabe zugrunde, einen Spreizdübel der eingangs genannten Gattung derart weiterzubilden, daß eine einfache und sichere Verankerung eines Spreizdübels ermöglicht wird, der die nachträgliche Befestigung von Gegenständen erlaubt.

Erfindungsgemäß wird dies dadurch erreicht, daß der Stehbolzen einen dem Spreizkonus gegenüberliegenden mit einer Aufspaltung versehenen Abschnitt aufweist, dessen beide durch die Aufspaltung gebildeten Segmente entgegengesetzt umbördelbar sind, daß die Spreizhülse eine mit einem Durchbruch zum Befestigen von Gegenständen ausgestattete Verlängerung aufweist, und daß die Spreizhülse auf dem Stehbolzen von den umbördelten Segmenten im Verankerungszustand gehalten ist.

Der erfindungsgemäße Spreizdübel wird in das vorbereitete Bohrloch so weit eingesetzt, bis der Stehbolzen auf dem Bohrlochgrund aufsitzt. Danach wird durch Schläge auf die Verlängerung die Spreizhülse auf den Spreizkonus aufgetrieben. Dabei bewegt sich die Spreizhülse in Richtung Bohrlochgrund, so daß der mit der Aufspaltung versehene Abschnitt des Stehbolzens aus der Innenbohrung der Spreizhülse herausragt. Durch Aufkeilen des Abschnittes beispielsweise mittels eines Hilfswerkzeuges werden die beiden durch die Aufspaltung gebildeten Segmente auseinandergedrückt und über die Stirnseite der Spreizhülse gebördelt. Damit ist die Aufspreizung der Spreizhülse und der Verankerungszustand fixiert. An die mit einem Durchbruch versehene Verlängerung der Spreizhülse kann nunmehr über einen Draht, Schraube oder dgl. ein Gegenstand angehängt werden. Die Gefahr des Abziehens der Spreizhülse vom Konus durch die angehängte Last ist nicht mehr gegeben, da über die Bördelung die an der Spreizhülse angreifende Last in den Stehbolzen eingeleitet wird. Die Aufspreizung bleibt somit in ihrer ursprünglichen Ausladung bestehen, so daß trotz erhöhter Zuglast an der Spreizhülse keine Verringerung des Haltewertes eintritt.

In einer weiteren Ausgestaltung der Erfindung kann die Verlängerung der Spreizhülse mit einem Einschnitt versehen sein, und die Segmente des Stehbolzens über den Einschnittgrund gebördelt sein.

In der Zeichnung ist ein Ausführungsbeispiel der Erfindung dargestellt.

Es zeigen :

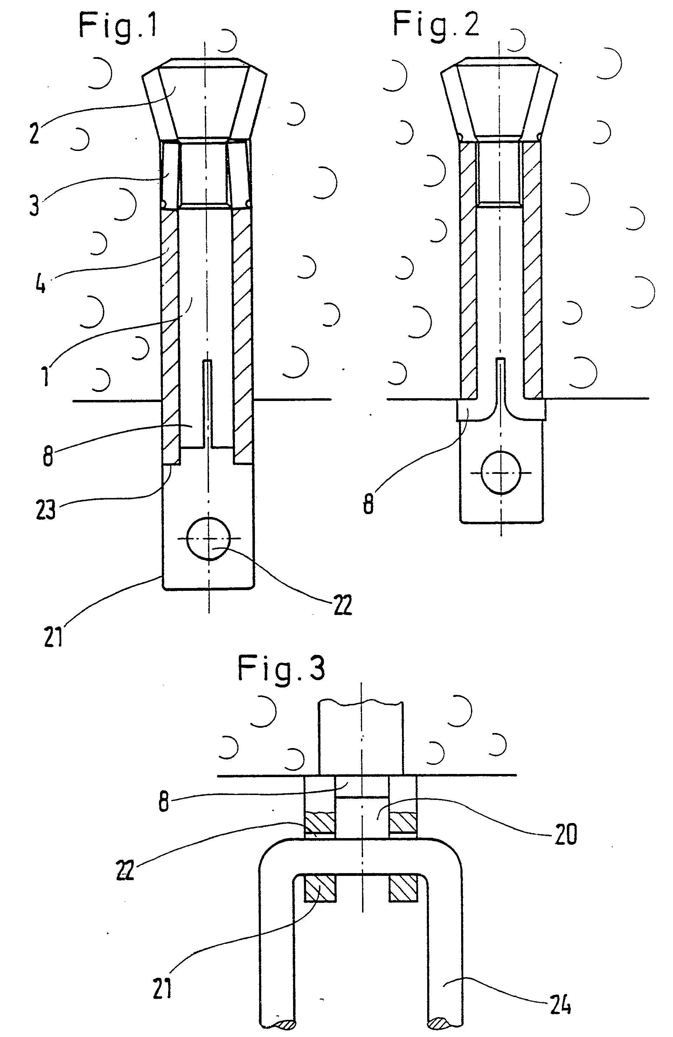

Figur 1 den im Bohrloch eingesetzten Spreizdübel,

Figur 2 den verankerten Spreizdübel,

Figur 3 eine um 90° gegenüber Figur 2 gedrehte Darstellung der Verlängerung mit eingehängtem Draht.

Der Spreizdübel besteht aus dem Stehbolzen 1 mit kegelförmigem Spreizkonus 2 und der über einen Teil ihrer Länge mit Längsschlitzen 3 versehenen Spreizhülse 4. Die Spreizhülse 4 weist eine mit einem Einschnitt 20 versehene Verlängerung 21 auf, wobei die lichte Weite des Einschnittes 20 dem Durchmesser der Innenbohrung der Spreizhülse 4 entspricht. Durch die Absetzung des Außendurchmessers der Spreizhülse gegenüber der Außenkontur der Verlängerung 21 entsteht eine Einschlagbegrenzung. Die sich durch den Einschnitt 20 ergebenden beiden Flansche der Verlängerung 21 sind mit einer Querbohrung 22 versehen, die die Befestigung eines Gegenstandes ermöglicht. Das den Spreizdübel aufnehmende Bohrloch 5 weist im Bereich des Bohrlochgrundes eine konisch nach innen sich erweiternde Hinterschneidung 6 auf, die mit einem dafür geeigneten Bohrgerät hergestellt ist. Zum Verankern des Spreizdübels wird die Spreizhülse 4 durch Schläge auf die Stirnseite der Verlängerung 21 auf den Spreizkonus 2 des Stehbolzens 1 aufgetrieben. Durch die axiale Verschiebung der Spreizhülse 4 in Richtung Bohrlochgrund überragt der mit der Aufspaltung 7 versehene Abschnitt des Stehbolzens 1 nach der Verankerung den Einschnittgrund 23. Mit einem in den Einschnitt 20 passenden meiselartigen Werkzeug werden die beiden Segmente 8 auseinandergedrückt und über den Einschnittgrund 23 gebördelt. Damit wird die Stellung der Spreizhülse 4 auf dem Stehbolzen 1 fixiert.

Durch Einhängen eines Drahtes 24 in die Querbohrung 22 der Verlängerung 21 können an den im Bohrloch verankerten Spreizdübel Gegenstände angehängt werden.

## Patentansprüche

1. Spreizdübel für die Verankerung in vorzugsweise konisch nach innen erweitert hergestellten Bohrlöchern, bestehend aus einem am Bohrlochgrund abzustützenden, einen Spreizkonus aufweisenden Stehbolzen, auf dessen Spreizkonus eine Spreizhülse auftreibbar ist, dadurch gekennzeichnet, daß der Stehbolzen einen dem Spreizkonus gegenüberliegenden mit einer Aufspaltung versehenen Abschnitt aufweist, dessen beide durch die Aufspaltung gebildeten Segmente entgegengesetzt umbördelbar sind, daß die Spreizhülse eine mit einem Durchbruch zum Befestigen von Gegenständen ausgestattete Verlängerung aufweist, und daß die Spreizhülse auf dem Stehbolzen von den umgebördelten Segmenten im Verankerungszustand gehalten ist.

2. Spreizdübel nach Anspruch 1, dadurch gekennzeichnet, daß die Verlängerung der Spreizhülse mit einem Einschnitt versehen ist, und die Segmente des Stehbolzens über den Einschnittgrund gebördelt sind.

## Claims

1. Expansion plug for anchoring in drill-holes, preferably inwardly flared drill-holes, the plug comprising a stay bolt which is to be supported at the bottom of the drill-hole and which has an expander cone onto which an expansible sleeve may be driven, characterized in that the stay bolt has, opposite the expander cone, a portion that is provided with a slot, and the two segments of that portion which have been formed by the slot can be flanged over in opposite directions, the expansible sleeve has an extension piece provided with an aperture for fastening articles, and, in the anchoring state, the expansible sleeve is held on the stay bolt by the flanged-over segments.

2. Expansion plug according to claim 1, characterized in that the extension piece of the expansible sleeve is provided with a recess, and the segments of the stay bolt may be flanged over the base of the recess.

## Revendications

1. Cheville expansible pour l'ancrage dans des trous forés ayant de préférence une forme conique s'élargissant vers l'intérieur, cette cheville consistant en une tige formant entretoise et présentant un cône expansible s'appuyant sur le fond du trou foré et sur lequel on peut faire coulisser un manchon expansible, cheville caractérisée en ce que la tige présente un tronçon muni d'une fente située en face du cône expansible et dont les deux segments formés par cette fente peuvent être rabattus en sens contraire, en ce que le manchon expansible présente un prolongement percé d'une perforation pour la fixation d'objets et en ce que le manchon expansible est maintenu sur la tige, par les segments rabattus, à l'état d'ancrage.

2. Cheville expansible selon la revendication 1, caractérisée en ce que le prolongement du manchon expansible comporte une entaille et en ce que les segments de la tige peuvent être rabattus sur le fond de cette entaille.

Fig.1

Fig.2

0 158 049

Fig.3